# EUROPEAN PATENT APPLICATION

(11) **EP 4 092 915 A1**
(43) Date of publication of application: **23.11.2022**
(21) Application number: 22174591.2
(22) Date of filing: 20.05.2022
(51) Int. Cl.: H04B 1/38, H04B 1/40, H04B 7/08, H01Q 5/335

(54) **MULTIBAND ANTENNA BOOSTER ARCHITECTURE WITH A SINGLE SWITCH**

(30) Priority: 21.05.2021 US 202163191334 P; 27.12.2021 EP 21217878
(71) Applicant: IGNION, S.L., 08174 Sant Cugat del Vallès (ES)
(72) Inventor: ANGUERA, Jaume, 12500 Vinaròs (ES); ANDÚJAR, Aurora, 08174 Sant Cugat del Vallès (ES); PUENTE, Carles, 08174 Sant Cugat del Vallès (ES)
(74) Representative: Toporcer Korec, Norman

(57) **Abstract**

A wireless device related to the present invention operates in more than one frequency bands and/or in more than one frequency regions and comprises a radiating system that includes an RF transceiver, at least a booster element or radiation booster or a modular multi-stage element; a ground plane layer eventually etched on a PCB, at least one external port connected to the RF transceiver, and a multiband and/or multi-region radiofrequency system that comprises a switch. Said radiating system also comprises a feeding architecture that connects the at least one antenna element or the at least one booster element to the radiofrequency system, said feeding architecture comprising a feeding line connected to a booster or antenna element and at least two feeding line extensions that are connected to a switch of the radiofrequency system and to the feeding line. A multi-region radiofrequency system related to this invention comprises a switch and at least two matching networks selectable through said switch, the at least two matching networks including two stages: a pre-matching stage and a common matching stage. In some embodiments, an isolating element is included and connected to the feeding line extensions comprised in the feeding architecture of the radiating system and to the feeding line.

## Description

### FIELD OF THE INVENTION

The present invention relates to the field of wireless devices that operate in multiple frequency bands and/or multiple frequency regions, the wireless devices comprising a smart radiating system that includes a radiofrequency system that comprises active elements like switches.

### BACKGROUND OF THE INVENTION

Wireless devices able to operate in multiple regions and/or frequency bands including a smart radiating system that comprises a smart radiofrequency system provide a solution for covering large bandwidths by optimizing the bands allocation. Usually, those radiofrequency systems comprise switches in their architecture or other active circuit components that provide with losses and need a more complex layout for integrating the radiofrequency system in a real PCB (printed circuit board). Regarding switches, a switch contains one or more inputs and one or more outputs, even if a switch normally is bidirectional, meaning that a signal can travel from an input to an output and from an output to an input. The inputs normally are named poles P and the outputs throughs T. So, an MPNT switch is a switch containing M poles and N throughs, being M and N an integer number. If the switch contains just one pole P and two throughs T, the switch is an SPDT or an SP2T switch (single pole-double through), and similarly with other input/output configurations, as for example SPNT (single pole-multiple throughs), as for instance SP4T (one pole-four throughs), or DP6T (double pole-6 throughs). There also exists multiple path or multi-path switches, able to route or connect a pole to two or more throughs simultaneously.

There exists in literature antenna systems comprising switches, like for example US 10,141,655 B2, US 10,418,704 B2 and KR 10-1490156 B1. Those antenna systems comprise conventional antennas that are space consuming and customized. So, a smart radiating system comprising radiation boosters like those described in, for example, the patent document WO2010/015365 A2 is an advantageous solution. The patent US 10,122,403 B2 discloses a multiband or multi-region wireless device that comprises a boosting element and a radiofrequency system comprising a tunable reactive element that can comprise a switch in some embodiments. Reducing the number of switches and the number of circuit components comprised in a radiofrequency system simplifies the radiofrequency architecture or configuration and reduces the losses related to the radiofrequency system. So, in the context of the present invention, an active radiating system comprising a multi-band and/or multi-region radiofrequency system, advantageously comprising only one switch, is provided and disclosed. However, it has been found that when mounting such a radiofrequency system, comprising more than one matching networks connected to a same antenna element, those matching networks matching the radiating system at different bands of operation, a charging problem may appear between the circuit components comprised in the different matching networks, particularly when circuit components connected to ground are included.

Additionally, when mounting in a real PCB a multi-region radiofrequency system that includes a switch, a charging problem arises between the feeding line extensions needed for connecting the switch to the feeding line that is connected to the antenna element included in the radiating system. More concretely, the charging problem appears between the feeding line extensions comprised and configured for providing operation at different frequency regions. Those problems are overcome by a radiating system related to the present invention.

### OBJECT AND SUMMARY OF THE INVENTION

The present invention relates to a wireless device able to operate in more than one frequency bands and/or in more than one frequency regions, the wireless device comprising a smart radiating system that comprises an RF transceiver, at least one booster element or radiation booster or a modular multi-stage element, a ground plane layer, at least one external port connected to the RF transceiver, and a multiband and/or multi-region radiofrequency system or radiofrequency architecture that comprises a switch that enables the device to provide coverage at the different frequency bands or frequency regions of operation and to provide large bandwidths by commuting operation between sub-bands within the frequency bands or the frequency regions of operation. In the context of this document, a frequency band refers to a range of frequencies used by a particular wireless communication standard, as for example cellular communication standards or NB-loT communication standards, but no limited to those; while a frequency region refers to a continuum of frequencies of the electromagnetic spectrum. For example, the NB-loT B20 band is allocated in a frequency band going from 791MHz to 862MHz; and the NB-loT B8 band is allocated in a frequency band going from 880MHz to 960MHz. A wireless device operating in the NB-loT B20 and the NB-loT B8 bands operates in a frequency region going from 791MHz to 960MHz. A wireless device that additionally operates at the NB-loT B3 band, going from 1710MHz to 1880MHz, operates in two different frequency regions, a first frequency region going from 791MHz to 960MHz and a second frequency region going from 1710MHz to 1880MHz.

In some radiating system embodiments, the radiofrequency system advantageously comprises only-one or a single switch, the radiofrequency system providing operation at the at least two frequency regions and/or at the at least two frequency bands of operation of the wireless device. Some of the advantages of these only-one switch embodiments are the reduction of the losses related to the radiofrequency system and its simplification, with less components, leaving more space for other circuit components as well as easing the integration of the radiofrequency system in the radiating system and in the wireless device.

A radiofrequency system related to this invention comprises a switch and at least two matching networks selectable through said switch, the at least two matching networks including two stages or parts, a pre-matching part or stage comprising at least one pre-matching circuit element or component, and a common matching part or stage, comprising at least one circuit element or component, the at least two pre-matching stages comprised in the at least two matching networks being connected to said common stage. Said switch selects a matching network of the at least two matching networks comprised in the radiofrequency system and connects at least one of the booster elements or a modular multi-stage element comprised in the radiating system to the RF transceiver. In some embodiments, one or more pre-matching stages are common to at least two matching networks of the radiofrequency system. In the context of this document, a pre-matching part or stage refers to at least a circuit element or component included in a first or initial part or stage of a matching network. A common matching stage or part refers to at least a circuit element or component that is common to at least two matching networks, so that, said part or stage contains the same components for those at least two matching networks. Some embodiments of a radiofrequency system related to this invention comprise pre-matching elements or components advantageously included in pre-matching network topologies comprising components that are not connected to ground, being advantageously included in series configuration. The different matching networks included in the radiofrequency system provide impedance matching for each frequency band or region of operation of the wireless device comprising the radiofrequency system.

In some embodiments, the pre-matching stages included in the radiofrequency system are advantageously comprised between a booster element or radiation booster or a modular multi-stage element, comprised in the radiating system that also comprises the radiofrequency system, and the switch. In those embodiments the switch is MPNT and at least two throughs T are connected to at least two pre-matching stages and at least one pole P is connected to the common stage. In other embodiments, the pre-matching stages included in the radiofrequency system are comprised between the switch and a common matching stage. In those embodiments the switch is MPNT and at least one pole P is connected to the booster element or the modular multi-stage element and at least two pre-matching stages are connected to at least two throughs T. Quite surprisingly, it has been found that better radiation and antenna efficiencies are achieved for a radiating system that comprises pre-matching stages between the booster element or the modular multi-stage element and the switch than those obtained for a radiating system comprising pre-matching stages after the switch and before the common matching stage.

The pre-matching and common stages comprised in a radiofrequency system related to this invention comprise circuit elements or components that are, in some embodiments, passive components, as for example passive reactive components, being, in other embodiments, active components, as for example tunable elements as tunable reactive components such as tunable capacitors and/or tunable inductors, or, in other embodiments, those circuit elements can be diodes or transmission lines, those elements not being limited to those components.

Other radiofrequency system embodiments comprised in a wireless device related to this invention include more than one switch. And among those embodiments including more than one switch, some of them comprise at least one multi-region switch, defined as a switch that is configured for providing operation at different frequency regions. Typically, a multi-region switch according to this invention is comprised in a radiofrequency system comprising at least two pre-matching stages and a common matching stage, as described for the previous embodiments.

A radiating system related to this invention and disclosed herein also comprises a feeding architecture that connects the booster or boosters included in the radiating system to the multiband and/or multi-region radiofrequency system comprising a switch. Typically, a feeding architecture comprised in a radiating system related to the present invention comprises a feeding line connected to a radiation booster, and comprises at least two feeding line extensions, comprising transmission lines in some embodiments, advantageously comprising strip lines in some of them, those feeding line extensions being connected to the switch and to the feeding line that is connected to a radiation booster. In some embodiments, in those comprising pre-matching elements between at least one booster and the switch, the switch is connected to the different feeding line extensions through those pre-matching elements or components. In other embodiments, in those comprising pre-matching elements between the switch and a common matching part, the switch is directly connected to the different feeding line extensions, typically through switch pads.

Some radiofrequency system embodiments of the present invention also comprise an isolating element, said isolating element included for avoiding interference between signals flowing through at least two feeding line extensions that may be comprised in the feeding architecture for connecting the booster element or the modular multi-stage element to the switch. The isolating element is connected to a feeding line comprised in the feeding architecture and to said feeding line extensions, said feeding line being connected to a booster element or a modular multi-stage element. Normally, each feeding line extension provides operation at a frequency region of operation. In some embodiments, this isolating element includes or is a filtering element, which blocks the signal transmission at some specific frequencies through the feeding line extension or extensions that provide matching and operation at frequencies different from the blocked ones. Surprisingly, said isolating element isolates the branches or extensions between them in such a way that it restores the impedance values obtained along the feeding line extensions for the different frequency regions of operation, so that the different extensions are not charging the others.

Other embodiments of a radiating system related to this invention comprise more than one, i.e. at least two, booster elements, a radiofrequency system comprising a switch, advantageously being only one switch in some embodiments, and a matching network or a pre-matching stage connected to each booster element, so that each booster element contributes independently to the radiation performance at one frequency band of operation of the radiating system or the wireless device. In some of these embodiments, those booster elements are comprised in a single piece or component, said component being a modular multi-stage element in some embodiments. In the context of this invention, a radiation booster or booster element refers to a radiation booster described and defined in the patent documents WO2010/015365 A2, WO2014/012842 A1 and WO2016/012507 A1, incorporated by reference herein. Also, the entire disclosure of the patent application WO 2019/008171 A1 is hereby incorporated by reference, where modular multi-stage elements are disclosed. One of the advantages of those embodiments, comprising more than one booster elements, is that they provide robustness to human interaction. Other embodiments comprising more than one booster elements are characterized by comprising at least a booster element connected to more than one pre-matching stages for providing multiband or multi-region operation with a single booster element. These radiating system embodiments, comprising more than one booster elements or radiation boosters, are advantageous for providing multi-region operation while reducing coupling between frequency bands or frequency regions, or reducing charging problems between feeding line extensions or branches in the feeding-architecture needed for connecting the boosters to the switch comprised in the radiofrequency system.

### BRIEF DESCRIPTION OF THE DRAWINGS

The mentioned and further features and advantages of the invention become apparent in view of the detailed description which follows with some examples of the invention, referenced by means of the accompanying drawings, given for purposes of illustration only and in no way meant as a definition of the limits of the invention.
Fig. 1 Illustrates the charging problem between matching components comprised in the different matching networks comprised in a radiofrequency system including only-one switch. This problem appears when the matching networks are located between a booster element and the switch, and there are components connected to ground.
Fig. 2 An embodiment of a radiating system that comprises a radiofrequency system according to the present invention comprising some pre-matching elements between a booster element and an RF switch.
Fig. 3 An embodiment of a radiating system that comprises a radiofrequency system according to the present invention comprising some pre-matching elements between an RF switch and a common matching stage comprising matching elements common to the different matching networks included in the radiofrequency system. The switch is in this case connected to a booster element, without pre-matching elements in between.
Fig. 4 Transmission coefficient comparison obtained for the radiofrequency systems provided in Fig. 2 and Fig. 3, at a frequency sub-band of operation.
Fig. 5 An embodiment of a radiating system comprising a radiofrequency system according to the present invention that comprises a multi-path RF switch.
Fig. 6 PCB layout embodiment corresponding to a radiofrequency system according to the present invention, comprising feeding line extensions and a switch layout.
Fig. 7 PCB layout embodiment according to a radiating system related to the present invention, including pads for allocating a filter between two transmission line extensions connected to a feeding line.
Fig. 8 An embodiment of a radiating system related to the present invention, said radiating system comprising more than one booster elements connected to a switch, and wherein each booster element is connected to the switch through a matching network or a pre-matching stage.
Fig. 9 An embodiment of a radiating system according to the present invention, said radiating system comprising more than one booster elements connected to a switch, wherein the booster elements or radiation boosters are arranged within a ground plane clearance at a corner of the PCB.
Fig. 10 An embodiment of a radiating system that comprises a radiofrequency system related to this invention, the radiating system comprising more than one booster elements, wherein one of them is connected to a plurality of matching networks.
Fig. 11 An embodiment of a radiofrequency system according to this invention, comprising a common pre-matching stage.
Fig. 12 An embodiment of a radiating system that comprises a radiofrequency system according to the present invention comprising some pre-matching elements between a booster element and an RF switch, the radiating system comprising an antenna component.
Fig. 13 An embodiment of a radiating system that comprises a radiofrequency system according to the present invention comprising some pre-matching elements between a booster element and an RF switch, the radiating system comprising a modular multi-stage element.

### DETAILED DESCRIPTION

As described before, in the context of the present invention, a wireless device providing operation at more than one frequency regions and/or frequency bands, the wireless device comprising a radiating system that comprises an RF transceiver, a radiation booster or booster element, a ground plane layer, at least an external port and a radiofrequency system comprising a switch is provided and disclosed. In some embodiments, only-one switch is advantageously comprised in the radiofrequency system, which provides operation at the at least two frequency regions and/or at the at least two frequency bands of operation of the wireless device.

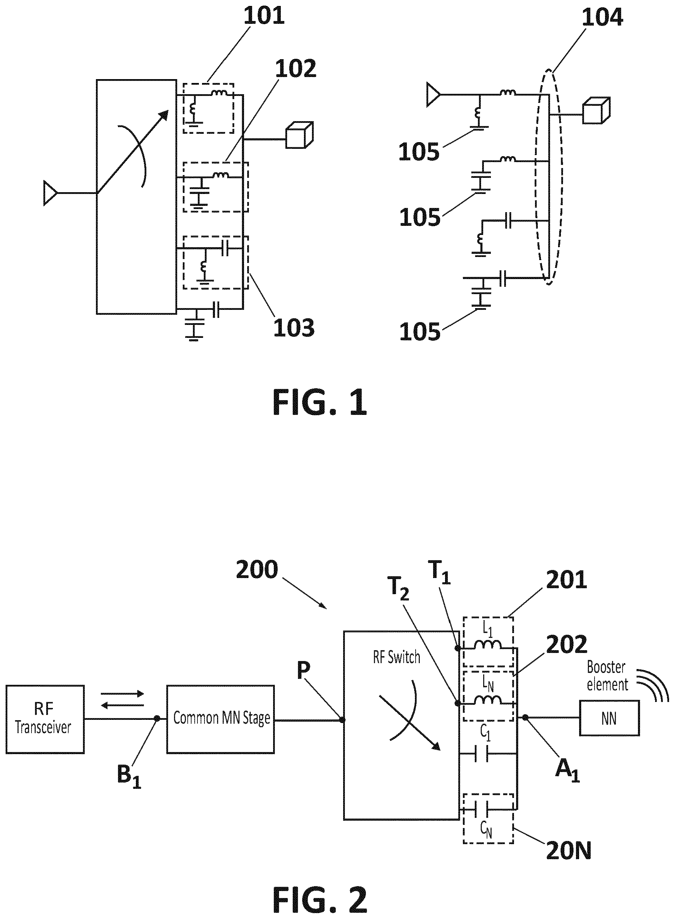

In Fig. 1, the problem that arises when only-one switch is included in a multiband or multi-region radiofrequency system is shown. When mounting such a radiofrequency system, which comprises more than one matching networks, for example 101, 102 and 103 in Fig. 1, for covering different sub-bands of operation, a charging problem may appear between the matching circuit components comprised in the different matching networks, because the different matching networks are connected between them (see 104). The problem appears particularly when those matching circuit components are included in a network topology comprising components connected to ground (see 105).

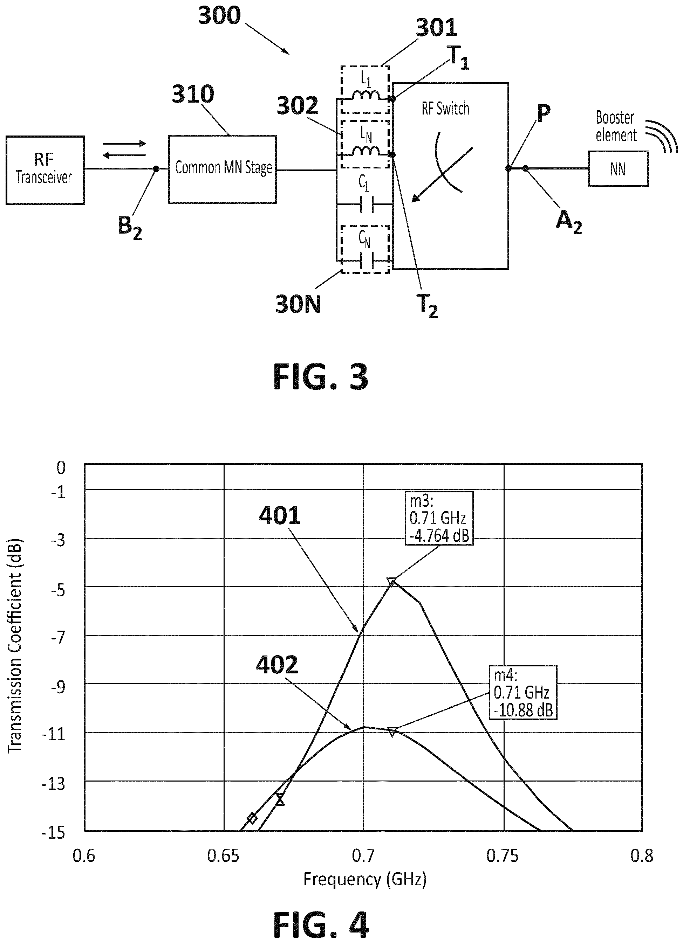

Fig. 2 and Fig. 3 provide embodiments of a radiating system 200, 300 that comprises a radiofrequency system according to the present invention. In an embodiment from Fig. 2, the pre-matching stages 201 to 20N included in the radiofrequency system are advantageously comprised between a booster element, comprised in the radiating system, and the RF switch. In this embodiment the switch is SPNT and at least two throughs T₁, T₂ are connected to at least two pre-matching stages and one pole P is connected to the common stage, which is also connected to an RF transceiver. In an embodiment from Fig. 3, the pre-matching stages 301 to 30N included in the radiofrequency system are comprised between the RF switch and the common matching stage 310 that is connected to an RF transceiver. In this embodiment the switch is SPNT and one pole P is connected to the booster element and at least two pre-matching stages are connected to at least two throughs T₁, T₂. It has been found that connecting the pre-matching stages to the booster element and to the switch, and the common matching stage between the switch and the RF transceiver, as it is the case for the embodiment from Fig. 2, provides better radiation and antenna efficiencies of the radiating system. Fig. 4 provides the transmission coefficient at a low frequency band of, for example, mobile frequencies, obtained for two radiating system embodiments comprising radiofrequency systems like the ones illustrated in Fig. 2 and Fig. 3. Curve 401 represents the transmission coefficient obtained for an embodiment from Fig. 2 from point A1 to point B1 and curve 402 represents the transmission coefficient obtained for an embodiment from Fig. 3 from point A2 to point B2. It is observed better or higher transmission coefficient for the embodiment from Fig. 2, more particularly, around 6dB higher at 710MHz for the examples used in the comparison provided in Fig. 4. A better transmission coefficient of the radiofrequency system means having less radiofrequency system losses and, consequently, better radiation and antenna efficiencies of the radiating system.

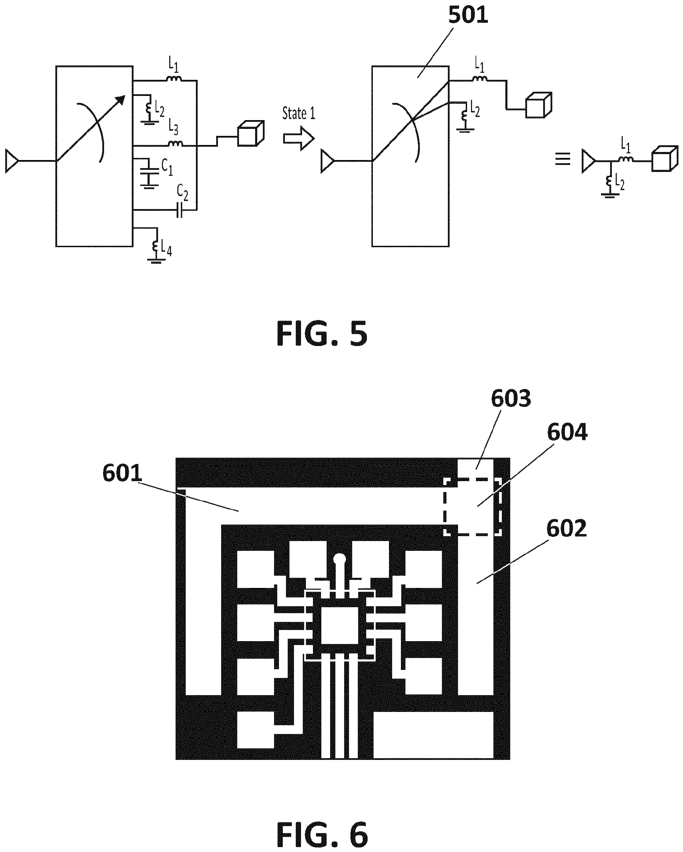

Fig. 5 provides another radiating system embodiment according to the present invention characterized by including a multi-path RF switch 501 in the radiofrequency system that allows a pre-matching stage to comprise elements connected to ground, as for example electronic components connected in parallel configuration, without creating charging problems between pre-matching elements and stages.

Fig. 6 provides a PCB layout embodiment corresponding to a radiofrequency system according to the present invention that is integrated in a real PCB. At least two feeding line extensions, particularly two 601 and 602 for this example, are comprised for connecting a booster element or radiation booster to the switch, said extensions being connected to a feeding line 603 that is connected to the radiation booster or booster element. Each feeding line extension provides operation at a frequency region of operation. In some embodiments, said radiofrequency system includes an isolation element, such as a filter, included in some embodiments in a position between the feeding line and the feeding line extensions (see 604), so that the isolation element is connected to the feeding line and to the feeding line extensions. It has been found that said isolation element or filter restores the impedance obtained along at least one feeding line extension for at least one frequency region of operation, so that the different extensions are not charging the others. Some radiating system embodiments do not include any isolation element for isolating the feeding line extensions between them.

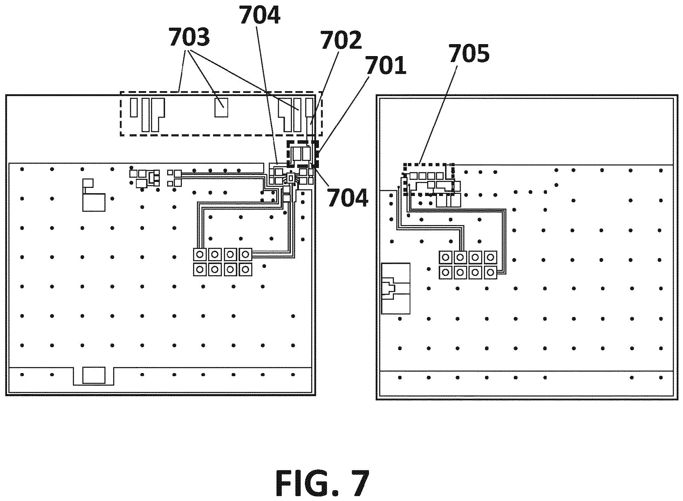

Fig. 7 provides another PCB layout embodiment, top and bottom layers, corresponding to the integration of a radiofrequency system according to the present invention in a real PCB. This radiofrequency system comprises a filter that is allocated in the layout pads 701, connected to two feeding line extensions 704 that are connected to a booster element feeding line 702. The layout pads 703 correspond to the pads of a modular multi-stage element, particularly a TRIO mXTEND^{™} component that comprises one booster element. Said filter allows to isolate the two feeding line extensions between them at some specific frequencies, allowing the radiating system to provide multi-region operation. At the bottom layer of said PCB layout, the pads 705 needed for allocating a common matching stage comprised in the radiofrequency system are included. Typically, a PCB layout corresponding to a radiofrequency system that comprises a switch comprises control lines for configuring the switch and pads for connecting the pins or ports of the switch. In some embodiments, the common matching stage and its corresponding pads are allocated at the top layer.

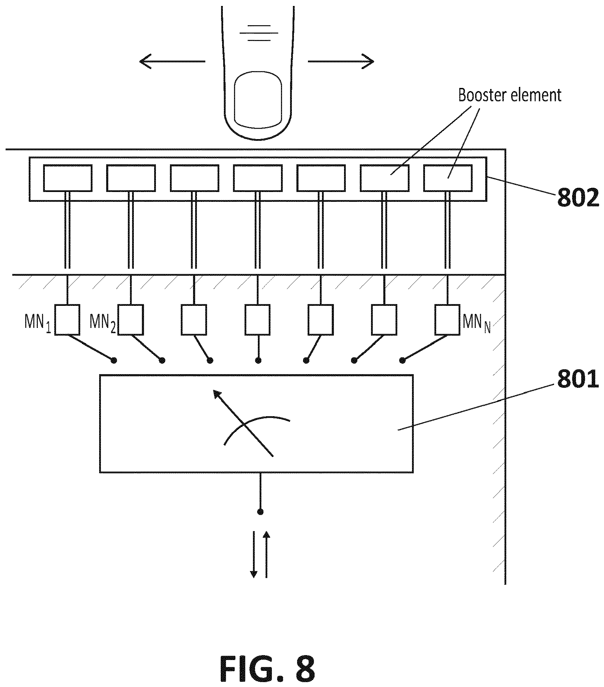

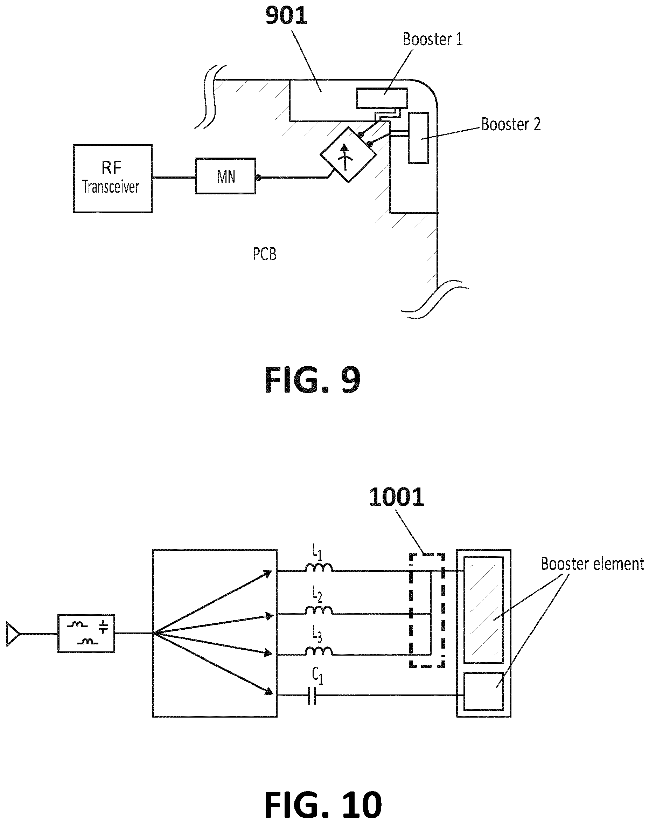

Other embodiments of a radiating system related to this invention are provided in Fig. 8 and Fig. 9. These radiating systems comprise more than one booster elements and a radiofrequency system comprising only one switch 801, wherein each booster element is connected to a matching network MN₁ to MN_{N} or a pre-matching stage comprised in a matching network of the radiofrequency system, so that each booster element contributes independently to the radiation performance at one band of operation of the radiating system or the wireless device. In some embodiments, those booster elements are comprised in a single piece or component 802, as shown in Fig. 8. In an embodiment from Fig. 9, the booster elements or radiation boosters are arranged within a ground plane clearance 901 at a corner of the PCB. One of the advantages of an embodiment like the one provided in Fig. 8 or Fig. 9 is that it provides robustness to human interaction.

Fig. 10 presents a radiating system according to the invention disclosed herein that also comprises more than one booster elements, but wherein one of them is connected to more than one 1001 matching networks for providing multi-band or multi-region operation. A radiating system comprising more than one booster elements or radiation boosters, like the one shown in Fig. 10, is an advantageous solution for providing multi-region operation while reducing coupling or charging problems between the different frequency regions of operation.

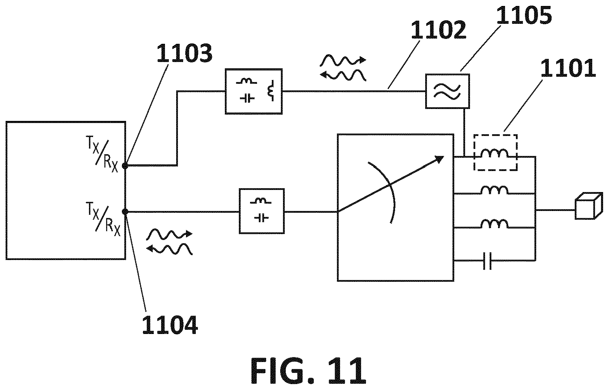

Fig. 11 provides a radiofrequency system related to the present invention that comprises a common pre-matching stage 1101 included in more than one matching network comprised in the radiofrequency system. More concretely, the radiofrequency system provided in Fig. 11 is comprised in a radiating system that includes more than one external ports, particularly two, connected to a first and a second ports comprised in an RF transceiver, wherein one external port 1104 operates at a first frequency band or frequency region and the other external port 1103 operates at a second frequency band or frequency region. In a more particular example, a first port 1104 operates at mobile or cellular bands and a second port 1103 operates at GPS bands. The signal paths that comprise the common pre-matching stage are isolated between them by an isolating element or a filter 1105, more concretely for the example operating at GPS and mobile frequencies a GPS band-pass filter 1105 is included in the GPS path 1102 for blocking the signal at other frequencies different from GPS frequencies.

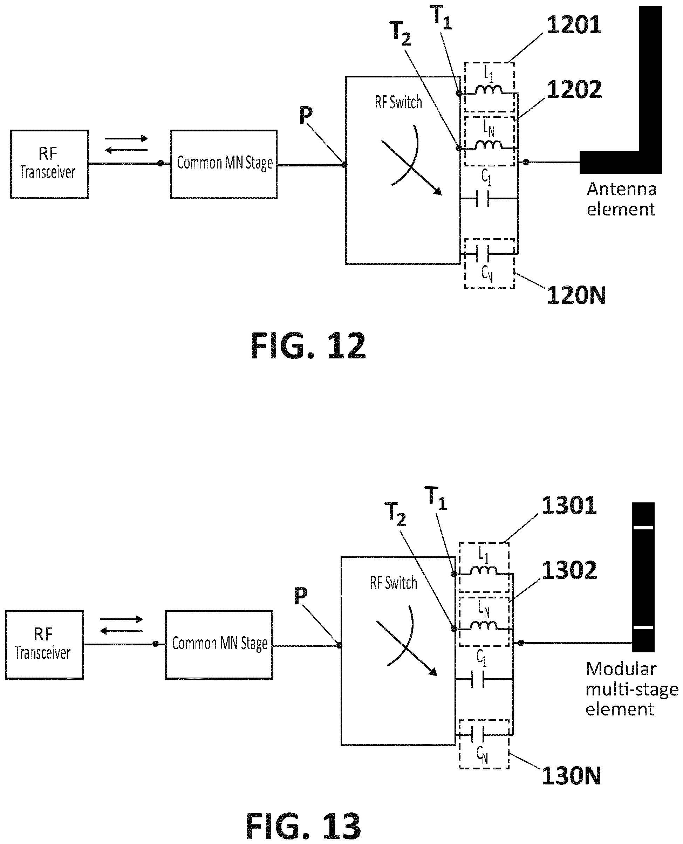

It has been found that this particular radiofrequency architecture comprising a switch and at least two matching networks including two stages or parts: a pre-matching stage and a common matching stage, is also suitable and beneficial for antenna systems including a radiating antenna component (see Fig. 12), such antenna preferably being non-resonant within the operating frequency bands when disconnected from the radiofrequency system. Fig. 13 provides an example of a radiofrequency system related to the present invention comprised in a radiating system that comprises a modular multi-stage element.

## Claims

1. A wireless device comprising a radiating system that comprises:
at least one booster element;
a ground plane layer;
an RF transceiver; and
a radiofrequency system comprising:
a switch; and
at least two matching networks selectable through said switch;
wherein each of said at least two matching networks includes two stages: a first common matching stage and a second specific pre-matching stage;
wherein the at least two pre-matching stages are connected to said common stage;
wherein said switch selects which matching network is used of the at least two matching networks and connects at least one booster element and the RF transceiver; and
wherein said radiating system provides operation at two or more frequency regions.

2. A wireless device of claim 1, wherein the switch is MPNT and at least one pole P is connected to the booster element and at least two pre-matching stages are connected to a through T.

3. A wireless device of claim 1, wherein the switch is MPNT and at least two throughs T are connected to at least two pre-matching stages and at least one pole P is connected to the common stage.

4. A wireless device of claim 2, wherein the switch is SPNT.

5. A wireless device of claim 3, wherein the switch is SPNT

6. A wireless device of claim 3, wherein the radiating system further comprises a feeding architecture that connects the at least one booster element to the radiofrequency system, the feeding architecture comprising:
a feeding line connected to a radiation booster; and
at least two feeding line extensions that are connected to the switch and to the feeding line.

7. A wireless device of claim 3, wherein the throughs T are connected to two or more booster elements.

8. A wireless device of claim 3, wherein two pre-matching stages comprise an inductor.

9. A wireless device of claim 7, wherein two pre-matching stages comprise an inductor.

10. A wireless device of claim 3, wherein a first pre-matching stage comprises an inductor and a second pre-matching stage comprises a capacitor.

11. A wireless device of claim 7, wherein a first pre-matching stage comprises an inductor and a second pre-matching stage comprises a capacitor.

12. A wireless device of claim 3, wherein two pre-matching stages comprise a series electronic component.

13. A wireless device of claim 7, wherein two pre-matching stages comprise a series electronic component.

14. A wireless device of claim 3, wherein a pre-matching stage is a series inductor.

15. A wireless device of claim 7, wherein a pre-matching stage is a series inductor.

16. A wireless device of claim 3, wherein a pre-matching stage is a series capacitor.

17. A wireless device of claim 7, wherein a pre-matching stage is a series capacitor.

18. A wireless device of claim 3, wherein a pre-matching stage is common to more than one matching networks comprised in the radiofrequency system.

19. A wireless device of claim 3, wherein:
a pre-matching stage is common to more than one matching networks comprised in the radiofrequency system; and
the RF transceiver comprises a first and a second ports.

20. A wireless device of claim 19, wherein the radiating system operates at mobile bands and at GPS bands.
